**Europäisches Patentamt**

**European Patent Office**

**Office européen des brevets**

(19)

(11) Publication number: **0 121 137**
**A1**

## (12) EUROPEAN PATENT APPLICATION

(21) Application number: **84102418.5**

(22) Date of filing: **07.03.84**

(51) Int. Cl.³: **F 16 L 55/16**
**F 28 F 11/02**

(30) Priority: **04.04.83 US 482095**

(43) Date of publication of application:
**10.10.84 Bulletin 84/41**

(84) Designated Contracting States:
**BE IT SE**

(71) Applicant: COMBUSTION ENGINEERING, INC.
1000 Prospect Hill Road
Windsor Connecticut 06095(US)

(72) Inventor: Gahwiller, Wayne Robert
854 Capitol Ave.
Hartford Connecticut 06106(US)

(72) Inventor: Burton, Harold Gordon
126 Granger St.
Springfield Massachusetts 01119(US)

(72) Inventor: Weiss, Stuart
99A Sycamore La.
Manchester Connecticut 06040(US)

(74) Representative: Gross, Gernot K.
Kleiberweg 5
D-6200 Wiesbaden(DE)

(54) Seal welded tube sleeve.

(57) A method for installing a sleeve within a tube, and the joint formed according to the method, are disclosed in the embodiment of a heat exchanger tube repair. The sleeve (26) is inserted into the tube (14) such that the upper end (36) is above the tube sheet and defect (22), and the lower end (30) is within tube sheet. The upper portion (28) of the sleeve is radially deformed against the adjacent tube wall (16') to form substantially coextensive permanent bulges (32, 34) around the circumferences of the sleeve and the tube. The sleeve bulge (32) is then displaced longitudinally, up or down, until the upper or lower portion of the sleeve bulge engages the upper or lower portion of the tube bulge, respectively, to form a mechanical interference region (40) between the bulges. A circumferential seal weld (42) is made in the bulge area extending from within the sleeve into the tube bulge. In one embodiment, the sleeve bulge is displaced upward, as by applying an upward force on the sleeve lower end in the vicinity of the tube sheet lower surface, before the sleeve is secured to the tube sheet (12). In another embodiment, the sleeve (26a) is secured to the tube sheet (38a), the coextensive bulges (32a, 34a) are formed above the defect, then a secondary sleve deformation (46, 48) is made near the sleeve bulge (32a), to displace or "pull" the sleeve bulge (32a) into interference fit (40a) with the tube bulge (34a).

FIG. 2a

FIG. 2c

## SEAL WELDED TUBE SLEEVE

### BACKGROUND OF THE INVENTION

This invention relates to tube joining, and more particularly to joining concentric tubes to form a bypass sleeve.

Large heat exchangers, particularly steam generators in pressurized water (PWR) nuclear power plants, typically contain a multiplicity of tubes secured at their ends to a tube sheet. The tube sheet serves not only to secure the tubes in place, but also to separate the shell side fluid outside the tubes, from the fluid passing through the tubes.

In the vertically oriented, PWR steam generators, crud or sludge deposits accumulate on the tube sheet and in some cases produce deterioration of the tube wall at an elevation immediately above the tube sheet. Since it is virtually impossible to replace individual tubes in a nuclear steam generator, one remedy has been to install a sleeve within each such deteriorated tube.

The sleeve must provide a substantially leak-tight seal whereby the deteriorated portion of the tube is isolated from the fluid flow within the tube. In nuclear steam generators, if the deterioration continues and the tube is perforated, the radioactive fluid from the tube side must not have a flow path to the shell side.

Although seemingly a simple matter, proper and effective sleeving of steam generator tubes presents several difficult problems. Repair work to the steam generator, such as sleeve installation, is performed in a highly radioactive environment, even though the steam generator is first drained. Thus, it is desirable that each sleeve be installed in a minimum of time, and preferably be adapted for remote, automated installation. Some tube sleeving techniques deform the sleeve into the surrounding tube, but this is much easier at the elevation of the tube sheet where the tube has a rigid backup. At elevations above the tube sheet, the tube has no backup and the amount of sleeve deformation into the tube must be carefully controlled and limited to avoid overstressing the tube. Even at maximum deformation, however, the "springback" of the sleeve deformation prevents formation of leak-tight seals.

Furthermore, the sleeve and tube expand and contract according to the operating history of the power plant, yet the seals therebetween must remain effective over many years.

SUMMARY OF THE INVENTION

According to the present invention, a novel method is claimed for installing a close-fitting cylindrical metal sleeve within a defective tube of a heat exchanger, to form a novel sleeve-to-tube joint.

The sleeve is inserted into the tube until an upper portion of the sleeve is above the tube defect while the lower portion of the sleeve is below the defect. The upper portion of the sleeve is radially deformed against the adjacent tube wall to form substantially coextensive permanent bulges around the circumferences of the sleeve and the tube. The sleeve bulge is then displaced longitudinally, up or down, until the upper or lower portion of the sleeve bulge engages the upper or lower portion of the tube bulge, respectively, to form a mechanical interference region between the bulges. A circumferential seal weld is made in the bulge area extending from within the sleeve into the tube bulge. Depending on the technique used to displace the sleeve bulge, the lower portion of the sleeve is secured and sealed to the tube sheet in a convention manner, either before or after the displacement step.

In one embodiment, the sleeve bulge is displaced upward, as by applying an upward force on the sleeve lower end in the vicinity of the tube sheet lower surface, before the sleeve is secured to the tube sheet.  In another embodiment, the sleeve is secured to the tube sheet, the coextensive bulges are formed above the tube defect, then a secondary sleeve deformation is made near the sleeve bulge, to displace or "pull" the sleeve bulge into interference fit with the tube bulge.

The invention provides a novel sleeve-to-tube joint having the benefits of both a mechanical interference fit and a circumferential seal weld.  Stresses on the tube joint, caused by thermal expansion or other loads on the steam generator, are transmitted through the interference fit between the sleeve and bulge tapers, which give rigidity to the interference region.  The seal weld provides the fluid-tight seal behind the interference region, and is not severely stressed.

BRIEF DESCRIPTION OF THE DRAWINGS

A more detailed description of the preferred embodiments of the invention, is set forth below with reference to the accompanying drawings, in which:

Figure 1 is a schematic illustration of a portion of the tube sheet of a vertically oriented heat exchanger, showing the tubes secured therein and a sleeve partially inserted into one of the tubes from below the tube sheet;

Figure 2(a) is a schematic illustration of the step of radially outwardly deforming the upper portion of the sleeve to form permanent sleeve and tube bulges;

Figure 2(b) shows the sleeve displaced upwardly relative to the position in Figure 2(a);

Figure 2(c) shows the completed upper joint having a circumferential weld seal between the sleeve and tube bulges;

Figure 2(d) shows the lower portion of the sleeve expanded and sealed into the tube sheet;

Figure 3(a) is a schematic of the first step of an alternative embodiment of the invention, showing the sleeve lower end secured to the tube sheet;

Figure 3(b) shows the sleeve and tube bulge located near the upper end of the sleeve;

Figure 3(c) shows a secondary sleeve and tube deformation below the upper bulge, which produces an interference region around the lower portion of the upper bulge; and

Figure 3(d) shows the circumferential seal weld formed between the sleeve and tube upper bulges.

Figure 4 is a detailed section view of the inventive joint.

DESCRIPTION OF THE PREFERRED EMBODIMENT

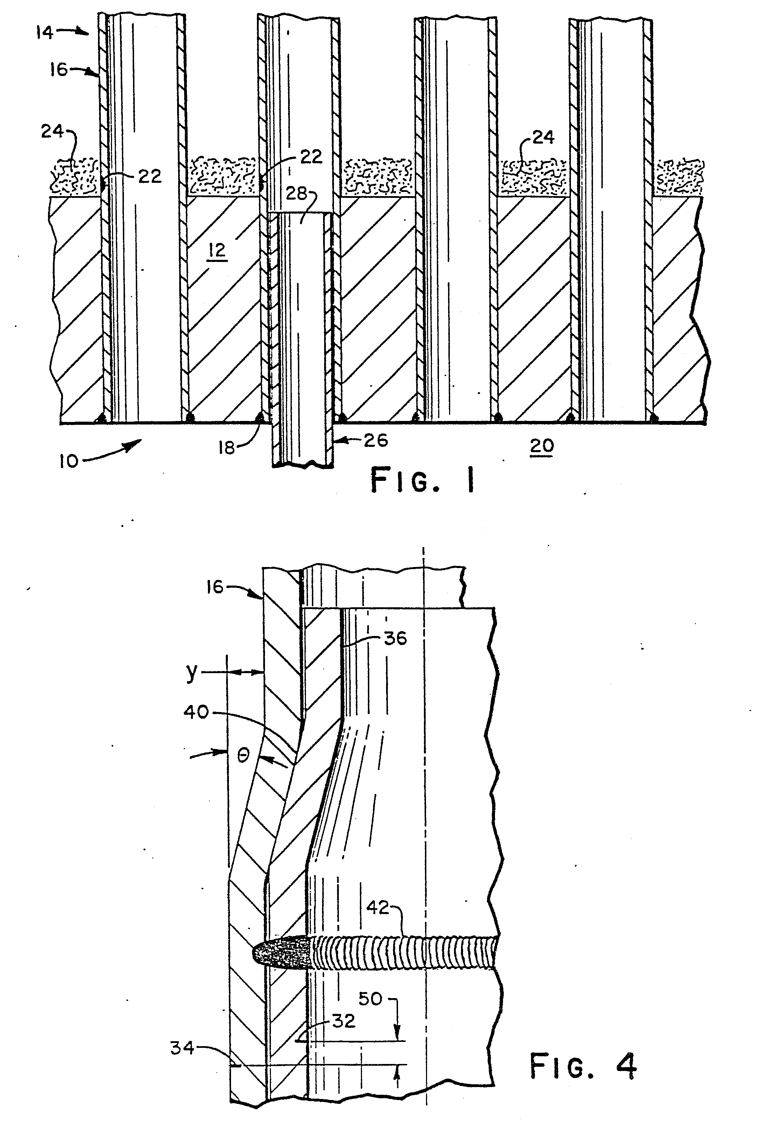

Figure 1 shows a portion of a heat exchanger, such as a vertically oriented steam generator 10 having a thick metal tube sheet 12 which secures and spaces a plurality of heat exchanger tubes 14. The tubes 14 are typically cylindrical, having thin walls 16 which are welded at 18 to the bottom of the tube sheet 12. The area 20 below the tube sheet contains, during steam generator operation, a supply of subcooled primary fluid at about 2250 psi which is pumped up through the tubes 14 to generate steam from the water surrounding the tube walls 16. In nuclear steam generators, the region 20 is highly radioactive and accordingly, when the region is drained workmen who attempt to perform any maintenance or repair operations on the tubes 14 must work quickly and be closely monitored as to radioactive exposure.

One important type of operation is to repair tube deterioration at locations such as 22, immediately above the tube sheet 12. The tube deterioration or defect 22 is caused by corrosion and heat transfer effects at the tube wall location adjacent to the layer of sludge or crud 24 that has been found to accumulate on the upper surface of the tube sheet 12.

The present invention relates to a method for efficiently and effectively installing a sleeve 26 into the degraded tube, to mitigate the consequences of defect 22.

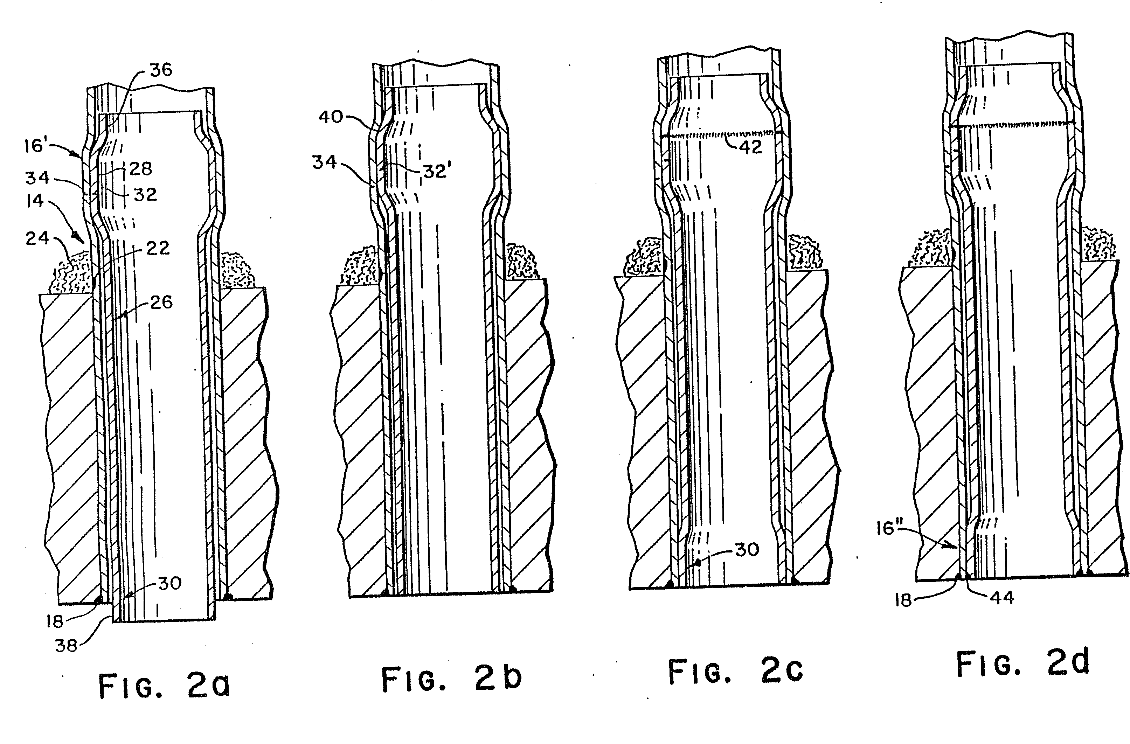

Referring now to Figures 1 and 2, the sleeve 26 is a thin walled, hollow, cyclindrical member, preferably of the same material as the tube 14, that closely but readily fits within tube 14. The length of the sleeve 26 is typically several times the thickness of the tube sheet 12. The sleeve 26 is inserted into the tube 14 until the upper portion 28 is above the defect 22 while a lower portion 30 is within the tube sheet.

In one embodiment of the invention the upper portion of the sleeve 28 is radially deformed outwardly into the adjacent tube wall 16' to form generally coextensive, permanent bulges around the circumferences of the sleeve and tube. The peaks, or centers, of the bulges are normally at the same elevation relative to the tube sheet, and are represented at 32 as the center of the sleeve bulge and at 34 as the center of the tube bulge. A conventional expander device adapted for use against unsupported tube walls, such as the type disclosed in U.S. 4,069,573, can be used to perform this step. Typically, the bulge height of the tube wall 16' is about 0.01 inch.

The next step, shown in Figure 2b, is to further insert the sleeve 26 to axially, or longitudinally, displace the sleeve bulge 32 slightly relative to the tube bulge 34, whereby a mechanical interference region 40 is formed between the tapered surfaces of the sleeve bulge and the tube bulge. The interference region may, but need not necessarily, form a leak tight fluid seal around the entire internal circumference of the tube. The interference fit must be sufficient to produce rigidity between the sleeve and tube in the axial and lateral directions. In effect, this interference fit has a tube strengthening function, whereas the primary sealing function is provided by the next step.

As shown in Figure 2c, a circumferential seal weld bead 42 is initiated on the inner surface of the sleeve bulge and extends through the bulge to penetrate the tube bulge. The seal 42 extends circumferentially around the joint, and assures that no primary fluid will flow around the sleeve end 36, circumvent the sleeve 26 and enter the secondary fluid through the tube defect 22.

In this embodiment, the lower end 38 of the sleeve is then permanently joined and sealed 44 to the tube 16'' the elevation of the tube sheet, by conventional techniques such as mandrel expansion and seal welding.

It may thus be appreciated that the interference region 40 provides rigidity and transmits mechanical and thermal loads between the tube and sleeve, while possibly providing a secondary sealing surface. The seal weld 42 provides a primary seal, and contributes to the overall joint rigidity as a secondary function.

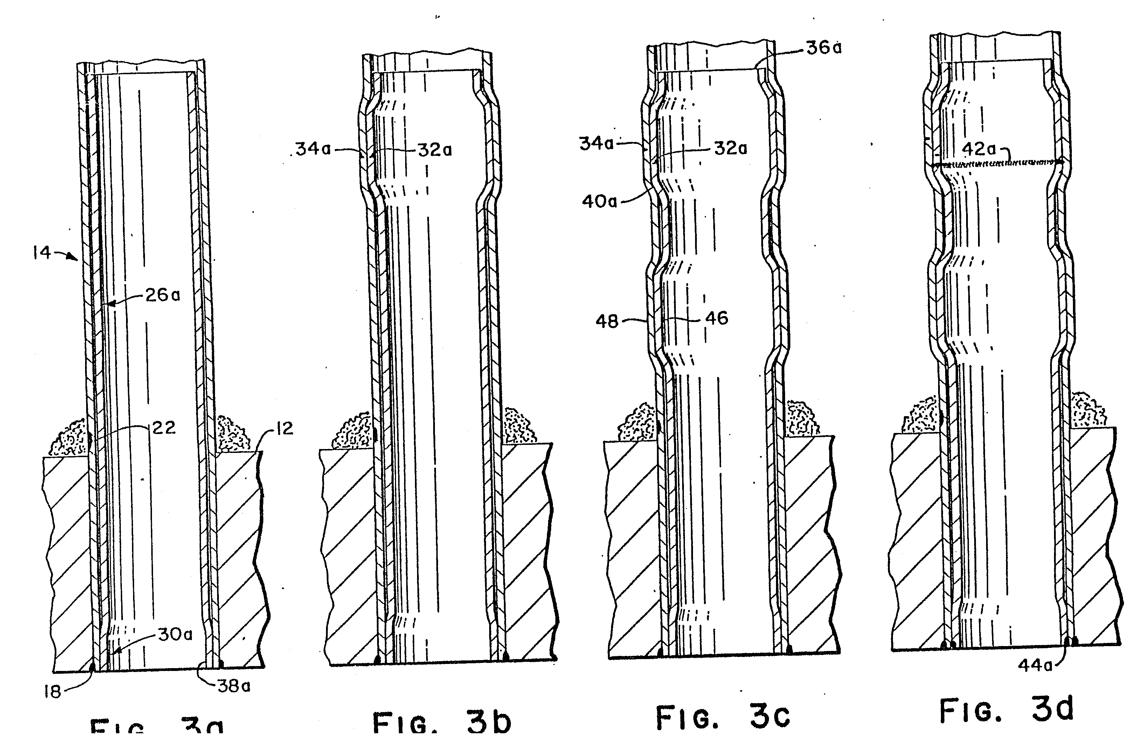

A different embodiment of the invention is illustrated in Figures 3a,b,c, and d. The sleeve 26a is inserted within the tube 14 until the lower end 38a is even with or slightly above the lower edge of the tube sheet 12. The lower portion 30a of the sleeve is expanded and joined to the tube.

The next step, shown in Figure 3b, is similar to that previously described with respect to Figure 2a, wherein the sleeve and tube are radially outwardly deformed to produce primary sleeve and tube bulges 32a and 34a, respectively. In this embodiment, the primary bulges are located a sufficient distance above the defect 22 to allow for secondary bulges 46,48 to be located above the defect, as shown in Figure 3c. The formation of the secondary bulges causes the sleeve primary bulge 32a to be drawn down slightly relative to the tube primary bulge 34a, thereby effectuating a rigid interference fit in the region 40a. This results from the fact that the tube and sleeve lower ends are secured to the tube sheet, thus immobilized relative to each other, and the sleeve upper end 36a is unrestrained while the tube upper end (not shown) is effectively rigidly secured to the steam generator. The secondary bulge joint continuously maintains the rigid interference fit in the upper joint.

In the final step, shown in Figure 3d, the seal weld 42a is made circumferentially around the bulge area, similar to

the embodiment described In Figure 2, and the sleeve lower end Is seal welded to the tube at 44a. This seal weld 44a could optionally be made when the sleeve lower end Is secured by expansion to the sleeve at 16''.

It should be appreciated that the common feature of both Illustrated embodiments Is the formation of an Interference region, followed by a circumferential seal weld In the bulge area, that penetrates the sleeve Into the tube.

Figure 4 shows an idealized schematic cross-section of a typical sleeve-to-tube-joint formed according to the inventive method such as Illustrated In Figure 2. In a typical embodiment, each bulge has a similar taper angle $\theta$ In the range of $\frac{1}{2}°$ to about 10°, and the tube bulge height, y, or permanent deformation, Is about 0.01 Inch. The bulge relative displacement 50 between the sleeve bulge center 32 and the tube bulge center 34 Is typically produced by a force of about 100 lbs. on the sleeve. The axial displacement of the sleeve bulge produces a wedge-like Interference region where the tapered surfaces mate at 40. The seal weld 42 is shown extending entirely through the sleeve bulge and penetrating the tube bulge. Conventional tooling and equipment are available to perform such a weld in the environment described herein.

The foregoing discloses a novel method for effecting a tube Joint, and Includes the novel tube Joint, comprising In particular the joining of a generally cylindrical metal tube to a generally cylindrical metal sleeve inside the tube. In the Joint, the sleeve has a permanent circumferential bulge Including upper and lower tapered portions and the tube likewise has a permanent circumferential bulge Including upper and lower tapered portions. The upper or lower portion of the sleeve bulge engages the upper or lower portion of the tube bulge, respectively, to form a mechanical Interference fit region between the bulges. A circumferential seal weld In the bulge area extends from within the sleeve Into the tube bulge, to permanently secure the sleeve to the tube.

CLAIMS

1. A tube joint comprising:

a generally cylindrical metal tube having a permanent circumferential bulge including upper and lower tapered portions;

a generally cylindrical metal sleeve joined to the inside of the tube, the sleeve having a permanent circumferential bulge including upper and lower tapered portions whereby the upper or lower portion of the sleeve bulge engages the upper or lower portion of the tube bulge, respectively, to form a circumferential mechanical interference fit region between the bulges; and

a circumferential seal weld extending from within the sleeve bulge into the tube bulge, to provide a permanent fluid seal.

2. The tube joint of Claim 1, wherein the interference fit provides rigidity to the joint and preferentially bears mechanical loads imposed between the tube and sleeve.

3. The tube joint of Claim 1 wherein the sleeve and tube bulges include tapered portions having similar taper angles in the range of about ½ to 10 degrees.

4. In a heat exchanger including a tube sheet having at least one generally cylindrical metal tube permanently secured to and extending above the tube sheet, an arrangement for joining a generally cylindrical bypass sleeve within the tube comprising:

the sleeve having its lower end joined and sealed against the tube at an elevation within the tube sheet, and its upper end joined to the tube above the tube sheet by a circumferential interference fit between deformed adjacent surfaces whereby the interference fit provides rigidity to the tube and bears mechanical loads imposed on the upper joint; and

a weld formed on the inner circumference of the deformed portion of the sleeve, said weld penetrating through the sleeve into the adjacent deformed portion of the tube, thereby forming a fluid-tight seal between the sleeve and tube.

5. The tube sleeving arrangement of Claim 4 wherein the upper joint deformations are characterized by adjacent, similarly shaped bulges having tapered portions, wherein the tapered portion of the sleeve bulge is wedged against the tapered portion of the tube bulge, to form the interference fit.

6. The tube sleeving arrangement of Claim 5 further including a secondary joint below the upper joint and above the tube sheet, characterized by substantially coextensive, permanent bulges in the sleeve and tube, said secondary joint continuously maintaining the rigid interference fit in the upper joint.

7. A method for joining a generally cylindrical metal sleeve within a generally cylindrical metal tube secured to a tubesheet in a heat exchanger, comprising the steps of:

inserting the sleeve into the tube such that the upper portion of the sleeve is above the tube sheet and the lower portion of the sleeve is within the tube sheet;

radially deforming the sleeve and tube at the upper portion of the sleeve, to form adjacent, generally coextensive permanent bulges;

longitudinally displacing the sleeve bulge relative to the tube bulge to form a mechanical interference fit region between the sleeve bulge and the tube bulge;

forming a weld bead through the inner circumferential surface of the sleeve bulge to penetrate the tube bulge whereby a fluid-tight seal is effected between the bulges; and

permanently joining and sealing the lower portion of the sleeve to the tube sheet.

8. A method for joining a generally cylindrical metal sleeve within a generally cylindrical metal tube, comprising the steps of:

inserting a portion near one end of the sleeve into the tube;

outwardly deforming said portion of the sleeve against the tube to form adjacent, generally coextensive permanent bulges, each bulge having a tapered surface;

longitudinally displacing the sleeve and tube bulges relative to each other, to form a wedge-like interference region between the sleeve and tube tapered surfaces;

forming a weld bead through the inner circumferential surface of the sleeve bulge to penetrate the tube bulge, whereby a fluid tight seal is effected therebetween.

9. The method of Claim 8 wherein the step of relatively displacing the sleeve and tube bulges includes the steps of (a) immobilizing both ends of the tube and the other end of the sleeve and (b) forming permanent, substantially coextensive sleeve and tube secondary bulges whereby, the sleeve primary bulge taper is drawn and maintained against the tube primary bulge taper.

FIG. 1

FIG. 4

FIG. 2a    FIG. 2b    FIG. 2c    FIG. 2d

0121137

0121137

FIG. 3d

FIG. 3c

FIG. 3b

FIG. 3a

# EUROPEAN SEARCH REPORT

**European Patent Office**

EP 84 10 2418

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 047 407 (WESTINGHOUSE) * Claims 1, 3; page 7, lines 11-34; figures 3, 4 * | 1-9 | F 16 L 55/16 F 28 F 11/02 |
| A | US-A-4 069 573 (ROGERS et al.) * Abstract; figure 1 * | 1 | |
| A,P | FR-A-2 514 099 (WESTINGHOUSE) | | |
| A | US-A-2 829 675 (MUELLER et al.) | | |

**TECHNICAL FIELDS SEARCHED (Int. Cl. ³)**

F 16 L 55/00
F 28 F 11/00

The present search report has been drawn up for all claims

| Place of search | Date of completion of the search | Examiner |
|---|---|---|
| BERLIN | 20-06-1984 | SCHLABBACH M |